# EUROPÄISCHE PATENTANMELDUNG

(11) **EP 4 180 497 A1**
(43) Veröffentlichungstag der Anmeldung: **17.05.2023**
(21) Anmeldenummer: 22210216.2
(22) Anmeldetag: 11.05.2011
(51) Int. Cl.: C09K 3/10, B65D 41/04, C08K 5/00

(54) **PVC-FREIE VERSCHLÜSSE**

(62) Teilanmeldung aus: 20162703.1
(71) Anmelder: ACTEGA DS GmbH, 28219 Bremen (DE)
(72) Erfinder: MÄNGEL, Dany, 27239 Twistringen (DE)
(74) Vertreter: Maiwald, Walter

(57) **Zusammenfassung**

Die vorliegende Erfindung betrifft Zusammensetzungen (Compounds), die als Dichtungsmaterial in Gefäßverschlüssen auch unter Pasteurisations- und gegebenenfalls Sterilisations-Bedingungen verwendet werden können. Spezieller betrifft die Erfindung solche Zusammensetzungen, die sich für aufdrehbare Gefäßverschlüsse wie z.B. Nockendrehverschlüsse und insbesondere Press-on/Twist-off^{®}-Verschlüsse eignen, und die eine verringerte Migration unerwünschter Substanzen bewirken.

## Beschreibung

### 1. Technisches Gebiet

Die vorliegende Erfindung betrifft Zusammensetzungen (Compounds), die als Dichtungsmaterial in Gefäßverschlüssen auch unter Pasteurisations- und gegebenenfalls Sterilisations-Bedingungen verwendet werden können. Spezieller betrifft die Erfindung solche Zusammensetzungen, die sich für aufdrehbare Gefäßverschlüsse wie z.B. Nockendrehverschlüsse und insbesondere Press-on/Twist-off^{®}-Verschlüsse eignen, und die eine verringerte Migration unerwünschter Substanzen bewirken.

### 2. Hintergrund der Erfindung

Seit langem werden in der Verpackungsindustrie Dichtungsmaterialien für Gefäßverschlüsse verwendet, die Polyvinylchlorid (PVC) enthalten.

Die Verwendung von PVC-haltigen Zusammensetzungen in Verpackungsmaterialien ist jedoch generell aus vielerlei Gründen nicht mehr erwünscht. So entstehen bei der Verbrennung von Haushaltsabfall aus Halogenkunstoffen säurehaltige Gase, deren Entweichen in die Atmosphäre schädlich ist. Zudem stören schon geringe Mengen PVC das werkstoffliche Recycling von Kunststoffabfällen. Überdies erfordern PVC-basierte Dichtungselemente den Einsatz von Weichmachern, die ggf. in die im Gefäß enthaltenen Nahrungsmittel migrieren können und deshalb aus gesundheitlichen Gründen bedenklich sind.

Aufgabe der vorliegenden Erfindung ist die Bereitstellung einer PVC-freien Zusammensetzung (nachfolgend auch als Polymercompound bezeichnet) für Gefäßverschlüsse, insbesondere für die Verpackung von Nahrungsmitteln. Nahrungsmittel (einschließlich Getränken wie Säfte und dergleichen) werden oft in Gefäße aus Glas oder Kunststoff verpackt, die in vielen Fällen dann einen Schraubdeckel haben. Schraubdeckel steht hier stellvertretend für Gefäßverschlüsse, die im befüllten und verschlossenen Zustand in einem Gewindeeingriff mit dem Gefäß stehen. Zur Öffnung des Gefäßes muss der Verschluss diesem gegenüber verdreht werden, wobei sich die Dichtung des Verschlusses vom Gefäßrand abhebt und das - oft - bestehende Vakuum im Gefäß aufgehoben wird. Der Verschluss kann durch eine solche Verdrehung vom Gefäß getrennt werden. Die bekannten PVC-haltigen Dichtungsmaterialien haben die hierfür nötigen Verarbeitungs- und Gebrauchseigenschaften. Es ist also zu beachten, dass eine PVC-freie Dichtungsmasse nur dann ein kommerziell interessantes Dichtungsmaterial für Gefäßverschlüsse darstellt, wenn die PVC-freie Dichtungsmasse ganz spezifische physiko-chemische Eigenschaften aufweist, die denen von PVC-haltigen Dichtungsmaterialien nicht nachstehen. Stülpdeckel (z.B. für Senfgläser) bzw. Einmaldeckel, z.B. crimp-on Deckel, die auf Glasbehältern mit großen Durchmessern verwendet werden, sind ebenfalls Verschlüsse im Sinne dieser Erfindung.

Speziellere Anforderungen umfassen beispielsweise folgende Aspekte:
- Die stoffliche Zusammensetzung soll so gewählt sein, dass unerwünschte Substanzen vermieden werden. Daher soll die Dichtungsmasse solche Substanzen nicht enthalten, die als gesundheitlich bedenklich eingestuft werden, insbesondere Weichmacher wie z.B. Phthalate; Semicarbazid und dessen Quellen, insbesondere ADC und OBSH; 2-Ethylhexansäure und deren Quellen; zinnorganische Verbindungen; primäre aromatische Amine; Bisphenole, Nonylphenol; BADGE; Photoinitiatoren; perhalogenierte Verbindungen; Melamin.
   Für einige Anwendungszwecke ist die Anwesenheit größerer Gehalte an (bei RT) flüssigen Substanzen unerwünscht. Dann sollte der Gehalt solcher Substanzen (wie z.B. Weißöl) auf maximal 10 %, vorzugsweise weniger beschränkt sein und in manchen Fällen sollte die Dichtungsmasse keine nachweisbaren Gehalte an solchen flüssigen Substanzen haben.
   Für den Fall, daß Bisphenol-A und Melamin vermieden werden soll, werden für den Gefäßverschluss Lacke eingesetzt, die solche Substanzen nicht enthalten. Dann sollte das Dichtungsmaterial so zusammengesetzt sein, dass mit solchen Lacken eine dauerhafte Verklebung erreicht wird.
   Die stoffliche Zusammensetzung sollte so gewählt sein, dass das Dichtungsmaterial beim Einsatz auch anspruchsvollen Anforderungen genügt.
   So sollte das Dichtungsmaterial vorzugsweise unter Pasteurisierungs- oder sogar Sterilisierungsbedingungen verwendbar sein, also einer Pasteurisierung (bis zu 98 °C) oder einer Sterilisierung (generell oberhalb 100 °C, oft oberhalb 105 °C oder oberhalb 110 °C, oder sogar oberhalb 120 °C, bis herauf zu 132 °C) standhalten.
   Für manche Einsatzzwecke sollte das Dichtungsmaterial eine Barrierefunktion haben, also das Eindringen unerwünschter Substanzen in das Gefäß verringern oder verhindern.
   Für spezielle Anwendungen sollte es möglich sein, das Dichtungsmaterial mit absorbierenden Zusätzen (z.B. Sauerstoffabsorber) oder Scavenger-Substanzen auszustatten.
- Das Dichtungsmaterial muss die benötigten Verarbeitungseigenschaften aufweisen.
   Grundsätzlich muss es sich thermisch ausreichend erweichen lassen, um (insbesondere für Extrusion mit anschließender Verstempelung bzw. Formpressen aber auch im Spritzgussverfahren) auf üblichen Verarbeitungsmaschinen einsetzbar zu sein.
   Es muss dennoch nach der Einbringung in den Gefäßverschluss und Abkühlung auf die gewünschte Anwendungstemperatur (meist RT, aber gegebenenfalls auch bei niedrigeren Temperaturen, z.B. im Kühlregal) die erforderlichen Dichtungseigenschaften haben.
   Für kleine Gefäßverschlüsse muss sich das Dichtungsmaterial auch vollflächig einbringen lassen.
   Für PT-Kappen (Press-on Twist-off^{®} Verschlüsse) muss das Dichtungsmaterial sowohl die Dichtung als auch das Innengewinde der Kappe ausbilden, und muss sich daher (als sog. "konturierter Ring") sowohl auf die Innenfläche als auch die Schürze der Kappe auftragen lassen, und beim Aufpressen der Kappe die Gewindeelemente ausbilden können.
   Für manche Anwendungen sollte das Dichtungsmaterial sich "out shell", d. h. außerhalb des Verschlusses zur Dichtungseinlage formen lassen, die dann als fertiger Dichtungsring oder dergleichen in den Gefäßverschluss eingesetzt wird.
   Das Dichtungsmaterial soll sich insbesondere für Metall-Verschlüsse, und Metall-Kunststoffverbünde, eignen, die gegebenenfalls innenlackiert sind, es soll sich aber auch für Kunststoff-Verschlüsse eignen.
- Das Dichtungsmaterial muss sich für übliche Lebensmittel-Verpackungen eignen.
   Die Dichtungseinlage muss sich pasteurisieren lassen (bis zu 98 °C oder auch mehr) und sollte sich vorzugsweise auch sterilisieren lassen (bis zu 132 °C).
   Die Dichtungseinlage muss einer Nachbehandlung (Pasteurisation und dergleichen) bei Gegendruck und Evakuierung standhalten; falls nötig, muss sie eine Vakuums-Retention und gegebenenfalls Barriereeigenschaften aufweisen.
   Die Dichtungseinlage soll sich für übliche Gefäße aus Metall, Kunststoff, Glas usw. eignen.
   Im Kontakt mit dem Füllgut, insbesondere bei fetthaltigen Lebensmitteln, alkoholischen Getränken und anderen Produkten mit (im Vergleich mit Wasser) lipophilem Charakter soll die Dichtungseinlage keine bzw. möglichst wenig Komponenten an das Füllgut abgeben.
   Die Dichtungseinlage muss ausreichend niedrige Aufdrehwerte zeigen, um den Gefäßverschluss (gegebenenfalls bei Kühlung) mit angemessener Kraft entfernen zu können. Gleichzeitig muss die Dichtung über die vorgesehene Lebensdauer (Mindesthaltbarkeit) des Lebensmittels ihre Dichtungswirkung zeigen.

Die der vorliegenden Erfindung zu Grunde liegenden Aufgaben werden durch die in den unabhängigen Ansprüchen definierten PVC-freien Zusammensetzungen gelöst. Vorteilhafte Ausgestaltungen sind in Unteransprüchen definiert.

### 3. Zusammenfassung der Erfindung

Generell werden erfindungsgemäß Polymercompounds als Dichtungsmaterial oder Dichtungsmasse eingesetzt. Unter einem Compound wird dabei ein Stoffgemisch verstanden, das neben wenigstens einem Polymer weitere Substanzen umfasst. Dabei kann es sich z.B. um andere Polymere, Streckmittel, Gleitmittel, Antioxidantien, Pigmente und andere Zusatzstoffe handeln.

Die erfindungsgemäßen PVC-freien Zusammensetzungen können durch Erwärmung ausreichend fließfähig gemacht werden. Nur so kann die Dichtungsmasse durch Extrusion oder ein ähnliches Verfahren im Bereich des zu erzeugenden Dichtungselementes auf den Gefäßverschluss-Rohling aufgetragen werden.

Nachfolgend kann die auf der Innenseite des Gefäßverschlusses aufgebrachte PVC-freie Zusammensetzung mechanisch zum gewünschten Dichtungselement geformt werden. Nach Abkühlung kann die aufgetragene Zusammensetzung ihre Form beibehalten und im Schließzustand dichtend an der Öffnung des mit dem Gefäßverschluss zu verschließenden Gefäßes anliegen.

Dabei kann die PVC-freie Zusammensetzung vorzugsweise bei der Herstellung beliebiger Gefäßverschlüsse verwendet werden, wie zum Beispiel zur Herstellung von Dichtungen in Nockendrehverschlüssen, Schraubdeckeln, drehbaren Kronkorken, Flaschenschraubverschlüssen und Press-on Twist-off^{®} Verschlüssen.

Die erfindungsgemäße PVC-freie Zusammensetzung ist also insbesondere ein für Gefäßverschlüsse geeignetes Dichtungsmaterial, welches
- einfach zu verarbeiten ist,
- in der industriellen Produktion schnelle Durchsätze ermöglicht,
- bei Pasteurisierbedingungen und/oder bei Sterilisationsbedingungen einsetzbar ist,
- selbst bei fetthaltigen Füllgütern gesundheitlich unbedenklich ist,
- weitestgehend oder völlig auf unvernetzten Polymeren basiert und ganz oder jedenfalls im wesentlichen frei von gesundheitlich bedenklichen Substanzen (wie Weichmachern und dergleichen) ist,
- kostengünstig ist, und/oder
- die Herstellung von Gefäßverschlüssen erlaubt, die im Schließzustand eine Gasbarrierewirkung, eine Überdruckventilwirkung und/oder eine Vakuumretention zeigen.

Generell umfasst ein erfindungsgemäßes Dichtungsmaterial ein Gemisch chemisch unterschiedlicher Komponenten, das wenigstens ein, meist wenigstens zwei verschiedene Polymere und weitere Bestandteile wie Gleitmittel, Stabilisatoren und gegebenenfalls weitere Bestandteile umfasst, die zur Einstellung der gewünschten Gebrauchseigenschaften dienen.

Ein spezielles Anwendungsgebiet der Erfindung sind die z. B. für Babynahrung sehr beliebten Press-on Twist-off^{®} Verschlüsse.

Definitionsgemäß handelt es sich bei einem "*Press-on Twist-off*^{®} *Verschluss"* um einen Verschluss, der beim erstmaligen Aufbringen auf das zu verschließende Gefäß aufgedrückt wird ("*Press-on*"), beim Entfernen jedoch gedreht werden muss ("*Twist-off*")*.* Dies steht im Gegensatz zu Schraubverschlüssen, die sowohl beim Verschließen des Gefäßes als auch beim Öffnen des Gefäßes einer Drehbewegung bedürfen.

Das Grundprinzip von Press-on Twist-off^{®} Gefäßverschlüssen ist zum Beispiel in der 1966 publizierten Patentschrift US 3,270,904 beschrieben:
An den Seitenwänden des Gefäßverschlusses wird eine Kunststoffmasse aufgebracht, die sich beim Verschließen des Gefäßes derart verformt, dass Gewindegänge gebildet werden, welche mit den Gewindeelementen des Gefäßes zusammenwirken (vgl. Spalte 2, Zeile 16 von US 3,270,904). Im Gegensatz zu Schraubkappen und Nocken-Drehverschlüssen hat der (metallene) Grundkörper des Gefäßverschlusses selbst kein Gewinde; das Gewinde wird ausschließlich vom Polymermaterial der Dichtungsmasse gebildet. Auf Grund der beim Aufpressen des Gefäßverschlusses gebildeten Gewindegänge wird eine Drehbewegung zur Entfernung des Gefäßverschlusses zwingend notwendig. Die auf der Innenseite des Gefäßverschlusses aufgebrachte Kunststoffmasse erfüllt bei einem Press-on Twist-off^{®} Gefäßverschluss (in US 3,270,904 als Press-on Turn-off Cap bezeichnet) also sowohl eine Dichtungs- wie auch eine Haltefunktion (vgl. die in Spalte 2, Zeilen 4-10 von US 3,270,904 beschriebene "*dual function").*

Bisher werden immer noch auf PVC basierende Compounds für solche Gefäßverschlüsse industriell verwendet.

Obschon die grundsätzliche Funktionsweise von Press-on Twist-off^{®} Gefäßverschlüssen seit Jahrzehnten bekannt ist, stellt deren kostengünstige (d.h. schnelle) Herstellung für die Verpackungsindustrie bis heute eine beachtliche Herausforderung dar. Dem Fachmann stellen sich dabei insbesondere folgende Aufgaben:
- Die auf die Innenseite des Gefäßverschlusses aufgetragene Dichtungsmasse kommt zwingend mit den sich im zu verschließenden Gefäß befindlichen Nahrungsmitteln in Kontakt. Angesichts dessen, dass die Migration von Bestandteilen der Dichtungseinlage des Gefäßverschlusses in das Nahrungsmittel nicht nur unerwünscht, sondern auch durch gesetzliche Bestimmungen stark reglementiert ist (vgl. 1. Absatz auf Seite 15 der Beschreibung der vorliegenden Anmeldung), ist die Auswahl der im Prinzip denkbaren Dichtungsmaterialien von vornherein eingeschränkt. Ein Ersatz für PVC-Compounds wird seit Jahren vergeblich gesucht.
   Für Babynahrung eignen sich bevorzugt Melamin-freie Verpackungen. Oft müssen die entsprechenden Gefäßverschlüsse mit Innen-Lackierungen versehen werden, die dann Melamin-frei sein müssen. Geeignet sind z.B. Polyester-Lacke. Das Dichtungsmaterial muss dann auf solchen Lacken ausreichend haftfähig sein.
- Das auf der Innenseite der Deckplatte angebrachte Dichtungsmaterial dient der hermetischen Abdichtung des zu verschließenden Gefäßes, d.h. hat zwingend eine Dichtungsfunktion. Im Gegensatz dazu dient das an den Seitenwänden des Gefäßverschlusses angebrachte Dichtungsmaterial der Zusammenwirkung mit den Gewindeelementen, insbesondere beim Aufdrehen, und hat somit überwiegend eine Hebelfunktion (vgl. Fig. 2 von US 3,270,904). Angesicht dieser unterschiedlichen Funktionen würde es sich anbieten, zwei unterschiedliche Materialen mit auf die jeweilige Funktion zugeschnittenen Materialeigenschaften zu verwenden. Eine solche Ausführungsform wäre aber nur unter großem Aufwand herstellbar und ist deshalb unter wirtschaftlichen Gesichtspunkten gänzlich uninteressant. Die gewünschten hohen Produktionsgeschwindigkeiten werden nur dann erreicht, wenn das Material auf der Innenseite der Deckplatte und an den Seitenwänden des Gefäßverschlusses dasselbe ist.
- Für die Dichtungsfunktion wird ein zumindest teilweise elastisches Material benötigt, das die erforderliche Anschmiegung an den Gefäßrand, die Vakuums-Retention, gegebenenfalls auch eine Barrierewirkung gegenüber dem Eintritt von Schadstoffen, Sauerstoff und dergleichen bewirken kann.
- Im Gegensatz dazu wird für die Haltefunktion ein eher steifes/hartes Material benötigt, da der Gefäßverschluss ansonsten ohne Drehbewegung abgehoben werden könnte oder die Gewindeelemente des Verschlusses den Aufdrehkräften nicht standhalten. Die Verwendung desselben Materials sowohl für die Haltefunktion wie auch für die Dichtfunktion stellt für den Fachmann somit eine große Herausforderung dar.
- Das Dichtungsmaterial muss sich, insbesondere durch Stempelung oder Einbringung durch Spritzguß, im Verschluss-Rohling in die benötigte Form bringen lassen. Dabei muss nicht nur der Dichtungsring ausgebildet werden, der im verschlossenen Zustand des Behälters dichtend am Behälter-Öffnungsrand anliegt. Gleichzeitig muss auch das Material, welches beim Aufpressen des Verschlusses dessen Innengewinde ausbildet, an der inneren Seitenwand (Schürze) des Verschlusses verteilt werden. Dazu muss das ausreichend erwärmte, fließfähige Compound bei der Stempelungstemperatur seitlich um den Stempel herum gleichmäßig in den Raum zwischen dem Stempel und der Seitenwand des Verschlusses fließen können.
- Die Wahl des passenden Dichtungsmaterials wird weiterhin durch die erforderlichen thermischen Eigenschaften erschwert. Beim Aufbringen des Deckels muss das Dichtungsmaterial genügend verformbar sein, um die Gewindeelemente des zu verschließenden Behälters auszubilden. Dennoch muss das Dichtungsmaterial Pasteurisier- und/oder Sterilisationsbedingungen aushalten und darf deshalb z. B. nur eingeschränkt fließfähig sein.

Es zeigt sich unmittelbar, dass die Bereitstellung eines PVC-freien Press-on Twist-Off^{®} Gefäßverschlusses den Fachmann vor eine deutlich schwierigere Aufgabe stellt, als die Bereitstellung eines anderen Gefäßverschlusses.

Im Stand der Technik sind für bestimmte Verschlüsse schon PVC-freie Zusammensetzungen beschrieben worden, die aber nicht industriell zum Einsatz gelangt sind.

Zum Beispiel offenbart WO 2009/059788 eine Zusammensetzung mit einem Ethylen-Okten-Copolymer, im Gemisch mit Ethylen-Vinyl-Acetat (EVA) und Polypropylen (PP). In der Praxis haben sich jedoch diese Compounds mit hohen EVA-Anteilen (hier: 40 %) als weniger bevorzugt erwiesen. Die Erfindung umfasst vorzugsweise Compounds mit EVA-Anteilen von weniger als 40 %, und besonders bevorzugt Compounds, die kein EVA enthalten.

Aus der Internationale Patentanmeldung PCT/EP2009/008273 ist eine Zusammensetzung bekannt, die zwei Polymere enthält, nämlich ein Ethylen-Okten-Block-Copolymer (39.1 %) und ein Ethylen-Okten-Random-Copolymer (60 %) mit einer Shore A-Härte von 85 bei einer Shore D-Härte von 25.

Auch diese Rezeptur erfüllt noch nicht alle Anforderungen, insbesondere bei Press-on Twist off^{®}-Verschlüssen, die einer pasteurisierenden oder sogar sterilisierenden Nachbehandlung des gefüllten und verschlossenen Gefäßes standhalten können. Die Erfindung stellt demgegenüber Zusammensetzungen vor, mit denen sich auch anspruchsvolle Anforderungen wie z.B. Dichtungen für Press-on Twist-off^{®} Verschlüsse, deutlich besser erreichen lassen.

### 4. Definitionen

Im Kontext der vorliegenden Erfindung bezeichnet der Ausdruck *"PVC-freie Zusammensetzung"* eine Zusammensetzung, die weniger als 1 Gew.-%, vorzugsweise weniger als 0,5 Gew.-%, noch bevorzugter weniger als 0,1 Gew.-% oder weniger als 1 Gew.-‰ und am bevorzugtesten (innerhalb der analytischen Bestimmungsgrenzen) gar kein PVC umfasst (jeweils bezogen auf das Gesamtgewicht der PVC-freien Zusammensetzung). Im Kontext der vorliegenden Erfindung werden als "*PVC-freie Zusammensetzungen"* nur diejenigen Zusammensetzungen betrachtet, die als Dichtungsmasse in Gefäßverschlüssen verwendet werden können. So ist beispielsweise ein Schmelzklebstoff oder ein Rein-Polymer im Kontext der vorliegenden Erfindung keine "*PVC-freie Zusammensetzung",* auch wenn kein PVC darin enthalten ist.

Im Kontext der vorliegenden Erfindung bezeichnet der Ausdruck "*Kunststoff"* ein Material, das mindestens ein synthetisches oder halbsynthetisches Polymer umfasst.

Im Kontext der vorliegenden Erfindung bezeichnet der Ausdruck "*Blockcopolymer"* ein Copolymer, das aus längeren Sequenzen oder Blöcken jedes Monomers besteht (z.B. AAAAAAAAABBBBBBBBBBBB...). Je nach Anzahl der Blöcke spricht man auch von Diblock-, Triblock-, etc. Copolymeren.

Im Kontext der vorliegenden Erfindung bezeichnet der Ausdruck *"Elastomerlegierung"* eine Mischung, die eine Kunststoffmatrix und ein, ggf. darin dispergiertes, Elastomer umfasst. Bei der Kunststoffmatrix kann es sich z.B. um einen Thermoplasten handeln.

Im Kontext der vorliegenden Erfindung bezeichnet der Ausdruck "*Thermoplast"* einen Kunststoff, der sich durch Erwärmen plastisch verformen lässt, sofern die durch Erwärmen erreichte Temperatur innerhalb eines materialspezifischen Temperaturbereichs liegt. Bis zu einer materialspezifischen Obergrenze kann ein Thermoplast reversibel erwärmt und abgekühlt werden, ohne dass eine thermische Zersetzung stattfindet.

Im Kontext der vorliegenden Erfindung bezeichnet der Ausdruck *"Elastomer"* einen formfesten Kunststoff, der sich typischerweise bei Raumtemperatur elastisch verformen lässt. Typischerweise liegt der Glasübergangpunkt eines Elastomers unterhalb der Raumtemperatur. Typischerweise lassen sich Elastomere als solche nicht schmelzen.

### 5. Detaillierte Beschreibung der Erfindung

Generell umfassen die erfindungsgemäßen Zusammensetzungen wenigstens ein, meist zwei chemisch und physikalisch unterschiedliche Polymere und zusätzlich
- ein drittes, von beiden genannten Polymeren chemisch und physikalisch verschiedenes Polymer;
- die Eignung für eine pasteurisierende, insbesondere auch für eine sterilisierende Nachbehandlung (bei Temperaturen oberhalb 100°C und bis zu 132°C, und/oder
- eine Shore A-Härte zwischen 40 und 95, vorzugsweise 45 bis 90, mehr bevorzugt zwischen 50 und 85 (insbesondere zwischen 70 und 85) sowohl bei 30 min/20°C als auch bei 24h/20°C und einen Druckverformungsrest DVR (in Prozent, analog ASTM D 395-97, Methode B bei 22h/70°C) zwischen 40 und 95, spezieller zwischen 50 und 90, bevorzugt zwischen 50 und 80, besonders bevorzugt zwischen 50 und 70 und speziell zwischen 50 und 60. Dabei ist es erfindungsgemäß erwünscht, dass der DVR bei 22h/20°C unterhalb 20 liegt und bei 22h/100°C unterhalb 95, speziell unterhalb 90 und besonders bevorzugt zwischen 80 und 90 liegt.

### 5.1 Bevorzugte Ausführungsformen mit 3 Polymeren

In manchen bevorzugten Ausführungsformen ist die erfindungsgemäße PVC-freie Dichtungsmasse eine Mischung, die mindestens drei unterschiedliche Kunststoffe umfasst, welche nachfolgend als Kunststoff 1, Kunststoff 2 und Kunststoff 3 bezeichnet werden.

Die erfindungsgemäße PVC-freie Zusammensetzung umfasst dabei vorzugsweise:
- Kunststoff 1
- Kunststoff 2
- Kunststoff 3
- optional Kunststoff 4,
- optional mindestens einen flüssigen Bestandteil
- optional mindestens ein Gleitmittel
- optional mindestens einen Stabilisator,
- optional mindestens ein Pigment, und/oder
- optional mindestens einen Füllstoff

Wenigstens ein Kunststoff ist in dieser Ausführungsform ein im wesentlichen nicht elastisches, thermoplastisches Polymer. Ein typisches Beispiel ist Polypropylen (PP).

Die anderen Kunststoffe sind dann vorzugsweise elastische thermoplastische Polymere bzw. thermoplastische Elastomere.

Üblicherweise unterscheidet man zwei Arten von elastischen Thermoplasten: (A) Blockcopolymere und (B) Elastomerlegierungen.

Kunststoff 1, Kunststoff 2 und/oder Kunststoff 3 können Blockcopolymere oder Polymerlegierungen sein. In Kontext der vorliegenden Erfindung sind die Begriffe "Kunststoff 1", "Kunststoff 2" und "Kunststoff 3" weit zu verstehen. Kunststoff 1, Kunststoff 2 und Kunststoff 3 können Reinstoffe (z.B. ein Blockcopolymer, ein Homopolymer etc.) oder Mischungen (z.B. ein Polymerblend, eine Polymerlegierung etc.) sein. Ist Kunststoff 1, 2 und/oder 3 ein Polymerblend oder eine Polymerlegierung, umfasst die erfindungsgemäße PVC-freie Zusammensetzung mehr als drei verschiedene Polymerarten.

Es hat sich nun überraschenderweise gezeigt, dass sich das der vorliegenden Erfindung zu Grunde liegende Problem in bevorzugten Ausführungsformen der Erfindung durch eine PVC-freie Zusammensetzung lösen lässt, die Kunststoff 1, Kunststoff 2 und Kunststoff 3 umfasst, die gezielt aus der Vielzahl der genannten, bekannten Kunststoffe passend ausgewählt werden.

Vorzugsweise handelt es sich bei **Kunststoff 1** um ein Polymer (bzw. ein Polymergemisch), das in erster Linie die Eigenschaften eines Thermoplasts aufweist. In sehr bevorzugten Ausführungsformen ist Kunststoff 1 ein klassischer Thermoplast, z.B. Polypropylen oder ein ähnliches Polyolefin.

Im Gegensatz dazu handelt es sich bei **Kunststoff 2** vorzugsweise um ein thermoplastisches Elastomer. In einer besonders bevorzugten Ausführungsform ist Kunststoff 3 ein Material wie z.B. SEBS.

Erfindungsgemäß handelt es sich bei **Kunststoff 3** vorzugsweise um ein elastisches Thermoplast, das einen ausgewogenen Kompromiss zwischen einem Elastomer und einem Thermoplast darstellt. In einer speziellen Ausführungsform ist Kunststoff 2 ein Olefin-Copolymer.

In einer bevorzugten Ausführungsform der Erfindung umfasst die erfindungsgemäße Zusammensetzung keine Compounds, deren polymere Hauptbestandteile aus 39 - 40 % Ethylen-Okten-Block-Copolymer und 45 - 60 % Ethylen-Okten-Random-Copolymer bestehen, insbesondere wenn zusätzlich ein Gehalt von bis zu 10 % PP vorliegt.

In bestimmten Ausführungsformen der Erfindung ist der Polymer-Hauptbestandteil ein thermoplastisches Elastomer oder ein elastischer Thermoplast, insbesondere ausgewählt aus SEBS, Propylen-basierenden Elastomeren und Terpolymeren.

Eine bevorzugte Ausführungsform der vorliegenden Erfindung ist schematisch in Abbildung 1 dargestellt.

### 5.1.1 Beziehungen zwischen Kunststoff 1, Kunststoff 2 und Kunststoff 3

Die Wahl der erfindungsgemäßen Kunststoffen 1, 2 und 3 kann je nach Anwendungsbereich zum Teil erheblich differieren. Dennoch gilt unabhängig von der Art des Gefäßverschlusses mindestens eine der nachfolgend aufgeführten Beziehungen zwischen den Kunststoffen 1, 2 und 3.

In bevorzugten Ausführungsformen der Erfindung gelten mehrere oder gar alle der folgenden Beziehungen:
Mindesttemperatur, bei der eine plastische Verformung möglich ist:
   Kunststoff 1 < Kunststoff 3 < Kunststoff 2
Glastemperatur (T_{g}),
   Kunststoff 1 > Kunststoff 3 > Kunststoff 2
Shore A Härte,
   Kunststoff 1 > Kunststoff 3 > Kunststoff 2
Elastizitätsmodul
   Kunststoff 1 > Kunststoff 3 > Kunststoff 2
Druckverformungsrest (22h / 70 °C)
   Kunststoff 1 > Kunststoff 3 > Kunststoff 2

### 5.1.2 Wahl von Kunststoff 1, Kunststoff 2 und Kunststoff 3

Kunststoff 1, Kunststoff 2 und Kunststoff 3 sind vorzugsweise bekannte, handelsübliche Kunststoffe. Anhand obiger Angaben zu Druckverformungsrest, Shore A Härte, Glastemperatur etc. ist der Fachmann in der Lage, geeignete, kommerziell erhältliche Kunststoffe, Polymere, Polymerlegierungen etc. zu identifizieren.

Als Kunststoff 1 kommen zum Beispiel folgende Handelsprodukte in Frage: Metallocen-katalysiertes Polypropylen, wie etwa Metocene^{®} HM; und andere Polyolefine, z.B. PE, LDPE.

Als Kunststoff 2 kommen unter anderem folgende Handelsprodukte in Frage: SEBS, z.B. Taipol^{®} oder Kraton^{®}; OBC's wie z.B. Infuse^{®}.

Als Kunststoff 3 kommen unter anderem folgende Handelsprodukte in Frage:elastische Thermoplasten, z.B. POE's wie etwa Engage^{®}, Vistamaxx^{®}.

### 5.1.3 Mengenangaben

Die Gewichtsanteile von Kunststoff 1, 2 und 3 in der erfindungsgemäßen PVC-freien Zusammensetzung können je nach Verwendung variieren.

Typischerweise liegt der Gewichtsanteil von **Kunststoff 1** in einem Bereich von oberhalb 0 Gew.-% bis 80 Gew.-%, bezogen auf das Gesamtgewicht der erfindungsgemäßen PVC-freien Zusammensetzung. Vorzugsweise liegt der Gewichtsanteil von Kunststoff 1 in einem Bereich von 10 Gew.-% bis 70 Gew.-%, bezogen auf das Gesamtgewicht der erfindungsgemäßen PVC-freien Zusammensetzung. Am bevorzugtesten liegt der Gewichtsanteil von Kunststoff 1 in einem Bereich von 10 Gew.-% bis 50 Gew.-%, bezogen auf das Gesamtgewicht der erfindungsgemäßen PVC-freien Zusammensetzung.

Typischerweise liegt der Gewichtsanteil von **Kunststoff 2** in einem Bereich von oberhalb 0 Gew.-% bis fast 100 Gew.-%, spezieller bis 70 Gew.-% bezogen auf das Gesamtgewicht der erfindungsgemäßen PVC-freien Zusammensetzung. Vorzugsweise liegt der Gewichtsanteil von Kunststoff 2 in einem Bereich von 10 Gew.-% bis 50 Gew.-%, bezogen auf das Gesamtgewicht der erfindungsgemäßen PVC-freien Zusammensetzung. Am bevorzugtesten liegt der Gewichtsanteil von Kunststoff 2 in einem Bereich von 20 Gew.-% bis 35 Gew.-%, bezogen auf das Gesamtgewicht der erfindungsgemäßen PVC-freien Zusammensetzung.

Typischerweise liegt der Gewichtsanteil von **Kunststoff 3** in einem Bereich von 10 Gew.-% bis 50 Gew.-%, bezogen auf das Gesamtgewicht der erfindungsgemäßen PVC-freien Zusammensetzung. Vorzugsweise liegt der Gewichtsanteil von Kunststoff 3 in einem Bereich von 15 Gew.-% bis 40 Gew.-%, bezogen auf das Gesamtgewicht der erfindungsgemäßen PVC-freien Zusammensetzung. Am bevorzugtesten liegt der Gewichtsanteil von Kunststoff 3 in einem Bereich von 20 Gew.-% bis 40 Gew.-%, bezogen auf das Gesamtgewicht der erfindungsgemäßen PVC-freien Zusammensetzung.

Der Fachmann versteht, dass die Summe der Gew.-% von Kunststoff 1, Kunststoff 2 und Kunststoff 3 höchstens 100-Gew.-% betragen kann. Beträgt die Summe der Gew.-% von Kunststoff 1, Kunststoff 2 und Kunststoff 3 weniger als 100-Gew.-% umfasst die PVC-freien Zusammensetzung weitere Bestandteile.

### 5.1.4 Weitere optionale Bestandteile

Optional kann die erfindungsgemäße Zusammensetzung einen flüssigen Bestandteil umfassen wie Weißöl, insbesondere bei Compounds, die ein thermoplastisches Elastomer wie SEBS umfassen. Solche Compounds können sterilisierbar sein, eignen sich aber weniger für fettige Füllgüter.

Weiterhin kann die erfindungsgemäße Zusammensetzung Gleitmittel umfassen. Zweck des Gleitmittels ist die Verringerung des Aufdrehwiderstands.

Daneben sind gegebenenfalls übliche Komponenten wie Stabilisatoren, Pigmente, Füllstoffe und dergleichen in üblichen kleinen Anteilen vorgesehen.

### 5.1.5 Ausführungsbeispiele

### Ausführungsbeispiel 1

| | | |
|---|---|---|
| Kunststoff 1 | Polypropylen | 10 Gew.-% |
| Kunststoff 2 | Olefin Block Copolymer | 48,8 Gew.-% |
| Kunststoff 3 | Polyolefinelastomer | 40 Gew.-% |
| Gleitmittel | | 0,6 Gew.-% |
| Stabilisator | | 0,3 Gew.-% |
| Pigment | | 0,3 Gew.-% |

| | | |
|---|---|---|
| Shore-A Härte (24 h / 20 °C) = 78 DVR (22 h / 70 °C) = 59 | | |

Diese Dichtungsmasse ist für fetthaltige Füllgüter hervorragend geeignet und pasteurisierbar, aber nicht sterilisierbar. Sie kann bei Gegendruck bis 98°C, ohne Gegendruck bis max. 105°C eingesetzt werden.

### Ausführungsbeispiel 2

| | | |
|---|---|---|
| Kunststoff 1 | Polypropylen | 26 Gew.-% |
| Kunststoff 2 | SEBS | 27 Gew.-% |
| Kunststoff 3 | Polyolefinelastomer | 38 Gew.-% |
| Haftvermittler | Polyester | 8 Gew.-% |
| Gleitmittel | | 0,5 Gew.-% |
| Stabilisator | | 0,2 Gew.-% |
| Pigment | | 0,3 Gew.-% |

Diese Dichtungsmasse eignet sich für PT-Kappen. Sie ist für fettige Füllgüter geeignet und sterilisierbar.
Shore A (24h / 20 °C) = 78
DVR (22 h/ 70 °C) = 69

### Ausführungsbeispiel 3

| | | |
|---|---|---|
| Kunststoff 1 | Polypropylen | 35 Gew.-% |
| Kunststoff 2 | Olefin-Block-Copolymer + SEBS | 44 Gew.-% |
| Kunststoff 3 | Polyolefinelastomer | 20 Gew.-% |
| Gleitmittel | | 0,5 Gew.-% |
| Stabilisator | | 0,5 Gew.-% |
| Shore A (24h / 20 °C) = 90 | | |

Diese Ausführungsform ist für fettige Füllgüter geeignet und sterilisierbar. Sie eignet sich für PT-Kappen.

### 5.2 Bevorzugte Ausführungsformen mit Kunststoffen 1 und 2

In anderen bevorzugten Ausführungsformen kann der 3. Kunststoff fehlen und ist dann oft durch eine bei Anwendungstemperatur (typischerweise RT) flüssige Komponente, insbesondere ein Strecköl, ersetzt.

Solche Ausführungsformen enthalten im Allgemeinen (bezogen auf das Gesamtgewicht der Dichtungsmasse mindestens 5 Gew.-% eines thermoplastischen Elastomers, vorzugsweise auf Styrol-Basis. Bevorzugt sind Styrol-basierte Block-Copolymere wie SBS, SEBS, SIBS. Besonders bevorzugt enthält das Compound mindestens 5 Gew.-% eines Styrol-Ethylen-Butylen-Styrol-Block-Copolymers (SEBS) und einen Mindestgehalt von 10% eines Polyolefin-Polymers. Als Polyolefinkomponente eignen sich PP oder HDPE, auch im Gemisch mit LDPE bzw. LLDPE.

Oft enthalten solche Dichtungsmassen erhebliche Mengen an Öl, bis zu über 50 Gew.-%, vorzugsweise aber zwischen 5 Gew.-% und 50 Gew.-% und besonders bevorzugt zwischen 35 Gew.-% und 50 Gew.-%.

Weißöl (mit geeigneter Viskosität, z.B. Viskosität 70) ist die am meisten bevorzugte Ölkomponente.

Diese Dichtungsmassen sind pasteurisierbar und meist auch sterilisierbar.

### 5.2.1 Ausführungsbeispiel 4

Eine bevorzugte Ausführungsform gemäß diesem Aspekt der Erfindung hat folgende Zusammensetzung:

| | | |
|---|---|---|
| Kunststoff 1 | Polypropylen + LDPE | 25 Gew.-% |
| Kunststoff 2 | SEBS | 33 Gew.-% |
| Ölkomponente | Weißöl | 40 Gew.-% |
| Gleitmittel | | 1 Gew.-% |
| Stabilisator | | 1 Gew.-% |

| | | |
|---|---|---|
| Shore A (24h) = 68 DVR (22h/ 70 °C) = 27 | | |

Diese Ausführungsformen eignen sich besonders für Dichtungseinlagen, die nicht mit fetthaltigen Füllgütern in Kontakt kommen. Sie kann für PT-Kappen verwendet werden, und ist sterilisierbar.

### 5.3 Ausführungsformen mit nur einem Kunststoff

Die meisten Compounds mit nur einem Polymer (neben Gleitmittel, Stabilisator und dergleichen) eignen sich nicht für die Zwecke der Erfindung. Compounds mit einem nicht elastomeren Thermoplast (z.B. die meisten PP-Typen) als einzigem Polymer sind zu hart und zu wenig elastisch. Compounds mit einem elastomeren Thermoplast oder thermoplastischem Elastomer sind hingegen zu weich.

Eine Ausnahme bilden auf Poly(ethylen-co-propylen) basierende Compounds,
die mit Gehalten an üblichen Gleitmitteln usw. zu einer erfindungsgemäßen Dichtungsmasse verarbeitet werden können.

Das Poly(ethylen-co-propylen) bildet den Hauptbestandteil der Dichtungsmasse, die vorzugsweise keine (oder nur sehr geringfügige) Gehalte an anderen Polymeren aufweist.

Diese Polymere haben eine Dichte (ISO 1183) von 0.8 bis 1.0, vorzugsweise 0.86 bis 0.9 g/cm, und speziell ungefähr 0.88 g/cm, und eine Schmelzflussrate (MFR, ISO 1133) von 10 bis 40, vorzugsweise 25 bis 29 g/10 min, insbesondere ungefähr 27 g/10 min.

Daraus hergestellte Dichtungseinlagen sind hart (Shore D (15 sec, ISO 868) im Bereich von 25-30, insbesondere von ungefähr 28), können für fettige Füllgüter verwendet werden, und eignen sich für PT-Kappen. Sie sind auch sterilisierbar.

Die Eignung zur Sterilisierbarkeit lässt sich am Dichtungsmaterial durch entsprechende Versuche ermitteln.

Eine Voraussage dieser Eignung ist mittels der bekannten Dynamisch-Mechanischen Thermo-Analyse (DMTA) möglich. Grundsätzlich wird dazu die Aufheizkurve für den Phasenwinkel (tan) delta bestimmt, deren Wendepunkt ausreichend (meist wenigstens 10 °C) oberhalb der vorgesehenen Sterilisationstemperatur liegen soll.

### Weitere Ausführungsbeispiele

1. Gefäßverschluss aus Metall oder Kunststoff für ein Gefäß zur Aufnahme von Nahrungsmitteln oder Getränken, mit einer Dichtungseinlage aus einem Dichtungsmaterial, das wenigstens ein Polymer im Gemisch mit weiteren Substanzen umfasst, wobei
   - das Dichtungsmaterial kein PVC und im Wesentlichen keine vernetzten Polymere enthält;
   - das Dichtungsmaterial im Wesentlichen frei von bei Anwendungstemperatur flüssigen Bestanteilen ist;
   - die Dichtungseinlage bei Temperaturen bis zu 98°C pasteurisierbar ist;
   - das Dichtungsmaterial eine Shore A-Härte zwischen 40 und 95 aufweist, und
   - das Dichtungsmaterial wenigstens drei verschiedene Polymere umfasst, von denen das erste ein im Wesentlichen thermoplastisches Polymer ist, während die beiden anderen Polymeren unterschiedliche plastische Thermoplasten bzw. thermoplastische Elastomere sind.
2. Gefäßverschluss aus Metall oder Kunststoff für ein Gefäß zur Aufnahme von Nahrungsmitteln oder Getränken, mit einer Dichtungseinlage aus einem Dichtungsmaterial, das wenigsten ein Polymer im Gemisch mit weiteren Substanzen umfasst, wobei
   - das Dichtungsmaterial kein PVC und im Wesentlichen keine vernetzten Polymere enthält;
   - das Dichtungsmaterial im Wesentlichen frei von bei Anwendungstemperatur flüssigen Bestandteilen ist;
   - die Dichtungseinlage bei Temperaturen bis zu 98°C pasteurisierbar ist, und
   - das Dichtungsmaterial ein Poly(ethylen-co-propylen) mit einer Dichte bei 23 °C (ISO 1183)
      von 0.86 - 0.9 g/cm³ (insbesondere etwa 0,88 g/cm³) und einer Schmelzflussrate bei 230 °C/2.16 kg (MFR, ISO 1133)
      von 25 - 29 g/10 min (insbesondere etwa 27 g/10 min) bei einer Shore D-Härte (15 sec, ISO 868)
      von 25 - 30, insbesondere von etwa 28, als Hauptbestandteil aufweist.
3. Gefäßverschluss aus Metall oder Kunststoff für ein Gefäß zur Aufnahme von Nahrungsmitteln oder Getränken, mit einer Dichtungseinlage aus einem Dichtungsmaterial, das wenigstens ein Polymer im Gemisch mit weiteren Substanzen umfasst, wobei
   - das Dichtungsmaterial kein PVC und im Wesentlichen keine vernetzten Polymere enthält;
   - die Dichtungseinlage bei Temperaturen bis zu 98°C pasteurisierbar ist, und
   - das Dichtungsmaterial bezogen auf das Gesamtgewicht des Dichtungsmaterials, einen Mindestgehalt von 5 Gew.-% eines Styrol-basierten Block-Copolymers (insbesondere ausgewählt aus SBS, SEBS, SIBS) und einen Mindestgehalt von 10% eines Propylen-Polymers und/oder Propylen-Copolymers, sowie ggf. wenigstens eine Ölkomponente umfasst.
4. Gefäßverschluss gemäß einem der Beispiele 1 bis 3, bei dem die Dichtungseinlage im Gefäßverschluss so angeordnet ist, dass sie im Schließzustand dichtend an der Öffnung des Gefäßes anliegt, wobei der Gefäßverschluss vorzugsweise aus Metall besteht.
5. Gefäßverschluss nach einem der Beispiele 1 bis 4, dadurch gekennzeichnet, dass der Gefäßverschluss einem Innendurchmesser der Gefäßöffnung von mehr als 2,5 cm, vorzugsweise mehr als 3 cm, mehr bevorzugt von mindestens 3,5 cm, besonders bevorzugt von mindestens 3,8 cm und ggf. von mehr als 4 cm entspricht.
6. Gefäßverschluss nach einem der Beispiele 1 bis 5, dadurch gekennzeichnet, dass der Gefäßverschluss als Schraubdeckel für eine Flasche, ein Glas oder dergleichen ausgebildet ist.
7. Gefäßverschluss nach einem der Beispiele 1 bis 6, bei dem der Gefäßverschluss ein Nockendrehverschluss, ein Press-on Twist-off^{®} Verschluss, ein Stülpdeckel, ein crimp-on bzw. Einmalverschluss (z.B. Pano AK) oder ein anrollbarer Metallverschluss ist.
8. Gefäßverschluss nach einem der vorstehenden Beispiele, dadurch gekennzeichnet, dass die Dichtungseinlage als Inneneinlage auf der Innenfläche und bei Press-on Twist-off^{®} Verschlüssen auch auf der Schürze des Gefäßverschlusses ("konturierter Ring") ausgebildet ist.
9. Gefäßverschluss nach Beispiel 8, dadurch gekennzeichnet, dass die Dichtungseinlage ringförmig oder kreisscheibenförmig ausgebildet ist.
10. Gefäßverschluss nach einem der vorstehenden Beispiele, dadurch gekennzeichnet, dass das Dichtungsmaterial so ausgebildet ist, dass die Dichtungseinlage bei einer Wärmebehandlung (mit oder ohne Druck) des gefüllten Gefäßes zwecks Sterilisation (oberhalb 98°C, bevorzugt oberhalb 105°C, besonders bevorzugt oberhalb 120°C und speziell zwischen 121°C und 132°C) einsetzbar ist.
11. Gefäßverschluss nach einem der vorstehenden Beispiele, dadurch gekennzeichnet, dass der Gefäßverschluss im Schließzustand eine Gas-Barrierewirkung und/oder eine Überdruckventilwirkung aufweist.
12. Gefäßverschluss nach einem der vorstehenden Beispiele, dadurch gekennzeichnet, dass der Gefäßverschluss im Schließzustand eine Vakuumsretention zeigt.
13. Gefäßverschluss nach einem der Beispiele 1 bis 12, bei dem das Dichtungsmaterial so gewählt ist, dass der Verschluss die Bestimmungen der Verordnung (EG) 1935/2004 erfüllt.
14. Gefäßverschluss nach einem der Beispiele 1 bis 13, bei dem das Dichtungsmaterial so gewählt ist, dass der Verschluss die Bestimmungen der Verordnung (EG) 2023/2006 erfüllt.
15. Gefäßverschluss nach einem der Beispiele 1 bis 14, bei dem das Dichtungsmaterial so gewählt ist, dass der Verschluss die Bestimmungen der EC-Richtlinie 2002/72/EG erfüllt.
16. Gefäßverschluss nach einem der Beispiele 1 bis 15, bei dem das Dichtungsmaterial so gewählt ist, dass der Verschluss die Bestimmungen der Verordnung (EU)10/2011 erfüllt.
17. Gefäßverschluss nach einem der vorstehenden Beispiele, wobei das Dichtungsmaterial nicht mehr als 50%, vorzugsweise nicht mehr als 35%, insbesondere nicht mehr als 20% und besonders bevorzugt nicht mehr als 5% von bei Anwendungstemperatur flüssigen Bestandteilen enthält.
18. Gefäßschluss nach Beispiel 17, wobei das Dichtungsmaterial innerhalb der Bestimmungsgrenzen keine bei Anwendungstemperatur flüssigen Bestandteile enthält.
19. Gefäßverschluss nach Beispiel 17 oder 18, wobei das Dichtungsmaterial weniger als 4% und vorzugsweise gar keine Streckmittel (insbesondere Weißöl) enthält.
20. Gefäßverschluss nach einem der vorstehenden Beispiele, bei dem das Dichtungsmaterial keine Weichmacher, insbesondere keine Phthalate,enthält.
21. Gefäßverschluss nach einem der vorstehenden Beispiele, bei dem die Shore A Härte des Dichtungsmaterials zwischen 40 und 95 liegt und das Dichtungsmaterial beim Druckverformungstest analog ASTM D395-97 Methode B bei 22 h/70°C einen Druckverformungsrest (DVR) von 25-90%, vorzugsweise von 55-90%, zeigt.
22. Gefäßverschluss nach einem der vorstehenden Beispiele, dadurch gekennzeichnet, dass das Dichtungsmaterial zwischen 0,1 und 80%, vorzugsweise zwischen 20 und 60 % und besonders bevorzugt zwischen 40 und 50%, wenigstens eines Block-Copolymers enthält, wobei das Block-Copolymer vorzugsweise ein Interpolymer von Ethylen mit mindestens einem C₃-C₂₀-alpha-Olefin oder ein Copolymer von Ethylen mit einem C₃-C₂₀-alpha-Olefin, gegebenenfalls in Kombination mit anderen ungesättigten Monomeren, ist.
23. Gefäßverschluss nach Beispiel 22, dadurch gekennzeichnet, dass das Block-Copolymer eine Dichte von 0,80 bis 1,1 g/cm³ aufweist und vorzugsweise einen Schmelzindex (MFI) von 0,01 g/10 min bis 1000 g/10 min, insbesondere einen MFI von 1 g/10 min bis 100 g/10 min, bei einer Auflage von 5 kg bei 190°C aufweist.
24. Gefäßverschluss nach einem der Beispiele 21 bis 23, dadurch gekennzeichnet, dass das Block-Copolymer aus Ethylen und einem Alken, insbesondere ausgewählt aus Propen, Buten, Hexen und Okten, und besonders bevorzugt Okten ausgebildet ist.
25. Gefäßverschluss nach Beispielen 21 bis 24 dadurch gekennzeichnet, dass das Dichtungsmaterial zwischen 0,1 % und 80%, vorzugsweise zwischen 20 und 60%, besonders bevorzugt zwischen 40 und 50% wenigstens eines random-Copolymers enthält, wobei das random-Copolymer vorzugsweise ein lineares Interpolymer von Ethylen und einem C₃-C₂₀-alpha-Olefin oder ein branched-Interpolymer von Ethylen und einem C₃-C₂₀-alpha-Olefin ist.
26. Gefäßverschluss nach Beispiel 25, dadurch gekennzeichnet, dass das random-Copolymer eine Dichte von 0,80 bis 1,1 g/cm³ und vorzugsweise einen Schmelzindex (MFI) von 0.15 g/10 min bis 100 g/ 10 min aufweist.
27. Gefäßverschluss nach einem der Beispiele 21 bis 26, dadurch gekennzeichnet, dass das random-Copolymer zwei Alkene, insbesondere ausgewählt aus Ethylen, Propen, Buten, Hexen und Okten, und besonders Ethylen und Okten umfasst.
28. Gefäßverschluss gemäß Beispiel 27, bei dem wenigstens ein Co-Polymer mittels Metallocenkatalyse hergestellt wurde.
29. Gefäßverschluss nach einem der Beispiele 21 bis 28, dadurch gekennzeichnet, dass die Zusammensetzung bis zu 50%, insbesondere bis zu 25% Polyolefine, vorzugsweise HDPE und/oder PP bzw. (co)PP, enthält, und vorzugsweise wenigstens ein Polymer auf Propylenbasis umfasst, welches einen Schmelzbereich oberhalb 90 °C hat.
30. Gefäßverschluss nach einem der vorstehenden Beispiele, dadurch gekennzeichnet, dass das Dichtungsmaterial eine Shore A Härte von 65 bis 90 und bevorzugt eine Shore A Härte von 75 bis 90 hat.
31. Gefäßverschluss nach einem der vorstehenden Beispiele, dadurch gekennzeichnet, dass der Druckverformungsrest des Dichtungsmaterials bei 22 h/ 70°C zwischen 55% und 75% und insbesondere bei etwa 70% liegt.
32. Gefäßverschluss nach Beispiel 1 oder Beispiel 3 bei dem das Dichtungsmaterial zwischen 5% und 70% SEBS und zwischen 10% und 50% eines Propylen-(co)-Polymers enthält.
33. Gefäßverschluss nach Beispiel 32, bei dem das Dichtungsmaterial zwischen 5% und 50%, vorzugsweise zwischen 20% und 50% und besonders bevorzugt zwischen 30% und 50% Weißöl enthält.
34. Gefäßverschluss nach Beispiel 32 oder Beispiel 33, bei dem das Dichtungsmaterial zwischen 20% und 50% SEBS, sowie bis zu 25% Polyethylen, insbesondere LLDPE; bis zu 50% PP, insbesondere Metallocen-katalysiertes PP oder HomoPP, und/oder bis zu 50% PP-basierendes Elastomer umfasst.
35. Gefäßverschluss gemäß einem der vorstehenden Beispiele, bei dem das Dichtungsmaterial bezogen auf sein Gesamtgewicht weniger als 30 Gew.-%, vorzugsweise weniger als 20 Gew.-%, mehr bevorzugt weniger als 10 Gew.-%, besonders bevorzugt weniger als 5 Gew.-% und speziell gar kein vernetztes Polymer enthält.
36. Gefäßverschluss aus Metall oder Kunststoff für ein Gefäß zur Aufnahme von Nahrungsmitteln oder Getränken, mit einer Dichtungseinlage aus einem Dichtungsmaterial, das wenigstens ein Polymer im Gemisch mit weiteren Substanzen umfasst, wobei
   - das Dichtungsmaterial kein PVC umfasst, und
   - die Dichtungseinlage bei Temperaturen bis zu 98°C pasteurisierbar und vorzugsweise bei Temperaturen bis zu 132°C sterilisierbar ist,
   - das Dichtungsmaterial ein thermoplastisches Elastomer (TPE), insbesondere ein teilvernetztes TPE basierend auf PP/EPDM, sowie gegebenenfalls ein PP oder (co)PP und/oder eine Ölkomponente umfasst
   - und der Gefäßverschluss ein Nockendrehverschluss, ein Stülpdeckel., ein crimp-on Verschluss, ein anrollbarer Metallverschluss oder insbesondere ein Press-on Twist-off^{®} Verschluss ist.
37. Gefäßverschluss nach einem der vorstehenden Beispiele mit einem Gehalt an einem Polyester im Dichtungsmaterial.
38. Verwendung eines Gefäßverschlusses gemäß einem der vorstehenden Beispiele, bei dem das Dichtungsmaterial im Wesentlichen frei von bei Anwendungstemperatur flüssigen Bestandteilen (insbesondere Ölen) ist, für fetthaltige Füllgüter, bei dem die Migration von Bestandteilen des Dichtungsmaterials in das Füllgut den Vorschriften der Verordnung (EG) 1935/2005, vorzugsweise auch der Verordnung (EG) 2023/2006, und den Richtlinien 2002/72/EG und 2007/19/EG und insbesondere der Verordnung (EU 10/2011) entspricht.
39. Dichtungseinlage, umfassend ein Dichtungsmaterial gemäß einem der Beispiele 1 bis 37.
40. Gefäß, insbesondere Schraubdeckelglas, für Getränke oder Nahrungsmittel, mit einem Gefäßverschluss gemäß einem der vorstehenden Beispiele.

## Patentansprüche

1. Gefäßverschluss aus Metall oder Kunststoff für ein Gefäß zur Aufnahme von Nahrungsmitteln oder Getränken, mit einer Dichtungseinlage aus einem Dichtungsmaterial, das wenigstens ein Polymer im Gemisch mit weiteren Substanzen umfasst, wobei
- das Dichtungsmaterial kein PVC und weniger als 30 Gew.-%>, vorzugsweise weniger als 20 Gew.-%>, mehr bevorzugt weniger als 10 Gew.-%>, besonders bevorzugt weniger als 5 Gew.-% und speziell gar kein vernetztes Polymer enthält und
- das Dichtungsmaterial bezogen auf das Gesamtgewicht des Dichtungsmaterials, einen Mindestgehalt von 5 Gew.-% eines Styrol-basierten Block-Copolymers (insbesondere ausgewählt aus SBS, SEBS, SIBS) und einen Mindestgehalt von 10% eines Propylen-Polymers und/oder Propylen-Copolymers,
- sowie wenigstens eine Ölkomponente
- umfasst.

2. Gefäßverschluss gemäß Anspruch 1, bei dem die Dichtungseinlage im Gefäßverschluss so angeordnet ist, dass sie im Schließzustand dichtend an der Öffnung des Gefäßes anliegt, wobei der Gefäßverschluss vorzugsweise aus Metall besteht.

3. Gefäßverschluss nach einem der Ansprüche 1 oder 2, **dadurch gekennzeichnet, dass** der Gefäßverschluss einem Innendurchmesser der Gefäßöffnung von mehr als 2,5 cm, vorzugsweise mehr als 3 cm, mehr bevorzugt von mindestens 3,5 cm, besonders bevorzugt von mindestens 3,8 cm und ggf. von mehr als 4 cm entspricht.

4. Gefäßverschluss nach einem der Ansprüche 1 bis 3, **dadurch gekennzeichnet, dass** der Gefäßverschluss als Schraubdeckel für eine Flasche, ein Glas oder dergleichen ausgebildet ist.

5. Gefäßverschluss nach einem der Ansprüche 1 bis 4, bei dem der Gefäßverschluss ein Nockendrehverschluss, ein Press-on Twist-off^{®} Verschluss, ein Stülpdeckel, ein crimp-on bzw. Einmalverschluss (z.B. Pano AK) oder ein anrollbarer Metallverschluss ist.

6. Gefäßverschluss nach einem der vorstehenden Ansprüche, **dadurch gekennzeichnet, dass** die Dichtungseinlage als Inneneinlage auf der Innenfläche und bei Press-on Twist-off^{®} Verschlüssen auch auf der Schürze des Gefäßverschlusses ("konturierter Ring") ausgebildet ist.

7. Gefäßverschluss nach einem der vorstehenden Ansprüche, **dadurch gekennzeichnet, dass** das Dichtungsmaterial so ausgebildet ist, dass die Dichtungseinlage bei einer Wärmebehandlung (mit oder ohne Druck) des gefüllten Gefäßes zwecks Pasteurisation (bis 98 °C)

8. Gefäßverschluss nach einem der vorstehenden Ansprüche, **dadurch gekennzeichnet, dass** die Dichtungseinlage zwecks Sterilisation (oberhalb 98°C, bevorzugt oberhalb 105°C, besonders bevorzugt oberhalb 120°C und speziell zwischen 121°C und 132°C) einsetzbar ist.

9. Gefäßverschluss nach einem der vorstehenden Ansprüche, **dadurch gekennzeichnet, dass** der Gefäßverschluss im Schließzustand eine Gas-Barrierewirkung und/oder eine Überdruckventilwirkung aufweist.

10. Gefäßverschluss nach einem der vorstehenden Ansprüche, **dadurch gekennzeichnet, dass** der Gefäßverschluss im Schließzustand eine Vakuumsretention zeigt.

11. Gefäßverschluss nach einem der vorstehenden Ansprüche, bei dem die Shore A Härte des Dichtungsmaterials zwischen 50 und 85 liegt und das Dichtungsmaterial beim Druckverformungstest analog ASTM D395-97 Methode B bei 22 h/70°C einen Druckverformungsrest (DVR) von 50-70% zeigt.

12. Gefäßverschluss nach einem der vorstehenden Ansprüche, **dadurch gekennzeichnet, dass** das Dichtungsmaterial zwischen 20 und 60 % wenigstens eines Block-Copolymers enthält, wobei das Block-Copolymer vorzugsweise ein Copolymer von Ethylen mit einem C3-C20-alpha-Olefin, gegebenenfalls in Kombination mit anderen ungesättigten Monomeren, ist.

13. Gefäßverschluss nach Anspruch 12, **dadurch gekennzeichnet, dass** das Block-Copolymer aus Ethylen und einem Alken, insbesondere ausgewählt aus Propen, Buten, Hexen und Okten, und besonders bevorzugt Okten ausgebildet ist.

14. Gefäßverschluss nach einem der Ansprüche 11 bis 13 **dadurch gekennzeichnet, dass** das Dichtungsmaterial zwischen 0, 1 % und 80%, vorzugsweise zwischen 20 und 60%, besonders bevorzugt zwischen 40 und 50% wenigstens eines random-Copolymers enthält, wobei das random-Copolymer vorzugsweise ein lineares Interpolymer von Ethylen und einem C3-C20- alpha-Olefin oder ein branched-Interpolymer von Ethylen und einem C3-C 20-alpha-Olefin ist.

15. Gefäßverschluss nach Anspruch 14, **dadurch gekennzeichnet, dass** das random-Copolymer eine Dichte von 0,80 bis 1, 1 g/cm 3 und vorzugsweise einen Schmelzindex (MFI) von 0.15 g/10 min bis 100 g/ 10 min aufweist.

16. Gefäßverschluss nach einem der Ansprüche 11 bis 15, **dadurch gekennzeichnet, dass** das random-Copolymer zwei Alkene, insbesondere ausgewählt aus Ethylen, Propen, Buten, Hexen und Okten, umfasst.

17. Gefäßverschluss nach einem der Ansprüche 11 bis 16, **dadurch gekennzeichnet, dass** die Zusammensetzung bis zu 50%, insbesondere bis zu 25% Polyolefine, vorzugsweise HDPE und/oder PP bzw. (co)PP, enthält, und vorzugsweise wenigstens ein Polymer auf Propylenbasis umfasst, welches einen Schmelzbereich oberhalb 90 °C hat.

18. Gefäßverschluss nach Anspruch 1 bei dem das Dichtungsmaterial zwischen 5% und 70% SEBS und zwischen 10% und 50% eines Propylen-(co)-Polymers enthält.

19. Gefäßverschluss nach Anspruch 18, bei dem das Dichtungsmaterial zwischen 20% und 50% Weißöl enthält.

20. Gefäßverschluss nach Anspruch 18 oder Anspruch 19, bei dem das Dichtungsmaterial zwischen 20% und 50% SEBS, sowie bis zu 25% Polyethylen, insbesondere LLDPE; bis zu 50% PP, insbesondere Metallocen-katalysiertes PP oder HomoPP, und/oder bis zu 50% PP -basierendes Elastomer umfasst.

21. Gefäßverschluss nach einem der vorstehenden Ansprüche mit einem Gehalt an einem Polyester im Dichtungsmaterial.

22. Dichtungseinlage, umfassend ein Dichtungsmaterial gemäß einem der Ansprüche 1 bis 21.

23. Gefäß, insbesondere Schraubdeckelglas, für Getränke oder Nahrungsmittel, mit einem Gefäßverschluss gemäß einem der vorstehenden Ansprüche.
